# EUROPÄISCHE PATENTSCHRIFT

(11) **EP 3 215 401 B1**
(45) Veröffentlichungstag und Bekanntmachung des Hinweises auf die Patenterteilung: **26.12.2018**
(21) Anmeldenummer: 15791530.7
(22) Anmeldetag: 21.10.2015
(51) Int. Cl.: B60R 16/02, B60K 37/00

(54) **KRAFTFAHRZEUG UND VERFAHREN ZUR HERSTELLUNG EINES KRAFTFAHRZEUGS**
MOTOR VEHICLE AND METHOD FOR PRODUCING A MOTOR VEHICLE
VÉHICULE À MOTEUR ET PROCÉDÉ DE FABRICATION D'UN VÉHICULE À MOTEUR

(30) Priorität: 04.11.2014 DE 102014222441
(43) Veröffentlichungstag der Anmeldung: 13.09.2017
(73) Patentinhaber: Bayerische Motoren Werke Aktiengesellschaft, 80809 München (DE)
(72) Erfinder: NIEDERMEIER, Anton, 84137 Vilsbiburg (DE); TROFFER, Franz, 94431 Grosskoellnbach (DE)
(86) Internationale Anmeldenummer: PCT/EP2015/074360
(87) Internationale Veröffentlichungsnummer: WO 2016/071111

(56) Entgegenhaltungen:
- WO-A1-2011/100891
- DE-A1- 10 124 995
- DE-A1- 10 251 746
- FR-A1- 2 891 513

## Beschreibung

Die vorliegende Erfindung betrifft ein Kraftfahrzeug, insbesondere einen Personenkraftwagen, sowie ein Verfahren zur Herstellung eines Kraftfahrzeugs.

Die im Bereich der vorderen Innenfront von Kraftfahrzeugen wie Personen- und Lastkraftwagen angeordneten Elemente werden gesamthaft häufig als Cockpit bezeichnet. Ein Cockpit kann Bedien- und Anzeigeelemente (z.B. die Anzeigeinstrumente des Armaturenbretts), Zierelemente (z.B. Blenden), Ablageelemente (z.B. ein Handschuhfach oder einen Aschenbecher) und weitere Elemente umfassen. Zahlreiche im Bereich des Cockpits angeordnete Elemente werden bei der Produktion eines Kraftfahrzeugs zunächst an einem separaten Vormontageplatz zu einem sogenannten Cockpitmodul zusammengefügt.

DE 101 24 995 A1 beschreibt eine Fahrzeugcockpit-Modulbaugruppe sowie ein Zusammenbauverfahren dafür. Dabei werden zur Vereinfachung des Zusammenbaus ein Armaturenbrett und dessen periphere Einrichtungen in eine Vielzahl von Submodul-Baugruppen aufgeteilt. Jede der Baugruppen wird als eine Einheit zusammengebaut. Anschließend werden die Baugruppen zusammengebaut.

Es ist bekannt, auch elektronische Steuergeräte des Kraftfahrzeugs im Bereich des Cockpits anzuordnen. Dies ist insbesondere bei solchen Steuergeräten üblich, deren Bedien- und Anzeigeelemente für einen Fahrer oder Beifahrer des Kraftfahrzeugs während der Fahrt leicht erreichbar sein sollen. Beispielweise war es lange Zeit üblich, im Cockpit einen sogenannten DIN-Schacht zur Aufnahme eines Radiogeräts genormter Größe vorzusehen. Typischerweise wies ein solches Radiogerät auf seiner Vorderseite Bedien- und Anzeigeelemente sowie Öffnungen für die Aufnahme von Tonträgern (z.B. Musikkassetten oder Compact Discs) und auf seiner Rückseite elektrische Anschlüsse für Lautsprecher- und Antennenkabel auf. Das Radiogerät wurde mit den Kabeln verbunden und in den Schacht geschoben, so dass die Vorderseite des Radiogeräts bündig mit der den DIN-Schacht umgebenden Oberflächen des Cockpits abschloss.

In modernen Kraftfahrzeugen kommen in aller Regel Multimediasteuergeräte zum Einsatz, deren Funktionsumfang denjenigen herkömmlicher Radiogeräte weit übersteigt. Beispielsweise können derartige Multimediasteuergeräte Telefon- und Navigationsfunktionen umfassen. Auch sind häufig die mit dem Multimediasteuergerät verbundenen Bedien- und Anzeigeelemente nicht mehr unmittelbar an einer Vorderseite des Multimediasteuergeräts angeordnet, sondern an anderen Stellen im Cockpit. Dennoch werden auch heutzutage Multimediasteuergeräte im Wesentlichen so im Kraftfahrzeug montiert wie dies vorstehend für herkömmliche Radiogeräte beschrieben wurde. Es werden also zunächst die Anschlusskabel mit den auf einer Rückseite des Multimediasteuergeräts befindlichen Anschlüssen verbunden. Neben Audio- und Antennenkabeln werden häufig auch Datenkabel angeschlossen, welche beispielsweise das Multimediasteuergerät mit den separaten Bedien- und Anzeigeelementen verbinden. Anschließend wird das Multimediasteuergerät in einen hierfür vorgesehenen Schacht im Cockpit geschoben, so dass die Vorderseite im Wesentlichen bündig mit der den Schacht umgebenden Oberfläche des Cockpits abschließt, wobei in der Regel noch ausreichend Platz für ein die Vorderseite des Multimediasteuergeräts bedeckendes Element, z.B. eine Zierblende, vorgesehen wird. Der Stand der Technik wird beispielsweise durch das von der Anmelderin angebotene Fahrzeugmodell der 3er-Reihe gebildet, welches später mit Bezug zu den anliegenden Figuren noch ausführlicher beschrieben wird.

Die beschriebene Anordnung des Multimediasteuergeräts im Kraftfahrzeug und das beschriebene Montageverfahren nach dem Stand der Technik weisen mehrere Nachteile auf. Ein erster Nachteil besteht darin, dass der die zum Anschluss des Multimediasteuergeräts benötigten Kabel umfassende Kabelstrang mindestens so lang sein muss, dass er bei der Montage des Multimediasteuergeräts aus dem Einbauschacht herausgeführt werden kann. Nachdem der Kabelstrang mit dem Multimediasteuergerät verbunden und dieses in den Einbauschacht eingeschoben ist, ist der Kabelstrang also länger als nötig. Für die überschüssige Länge des Kabelstrangs muss hinter dem Steuergerät daher ein ansonsten nicht nutzbares Volumen freigehalten werden, was einen weiteren Nachteil darstellt. Nicht zuletzt besteht ein Nachteil des Standes der Technik darin, dass das Multimediasteuergerät nicht bereits bei der Vormontage in das Cockpitmodul eingebaut werden kann, da es zunächst noch auf seiner Rückseite mit dem (in der Regel bereits in der Karosserie des Kraftfahrzeugs verlegten) Kabelstrang verbunden werden muss.

Der Erfindung liegt die Aufgabe zugrunde, ein Kraftfahrzeug anzugeben, das eine verbesserte Ausnutzung des vorhandenen Bauraums im Cockpitbereich sowie eine Verkürzung der benötigten Länge des Kabelstrangs ermöglicht. Weiter besteht die Aufgabe darin, ein verbessertes Verfahren zur Herstellung eines Kraftfahrzeugs anzugeben.

Die Aufgabe wird gelöst bei einem Kraftfahrzeug mit den Merkmalen des Patentanspruchs 1 sowie einem Verfahren mit den Merkmalen des Patentanspruchs 7. Vorteilhafte Weiterbildungen sind Gegenstände der abhängigen Ansprüche.

Ein gattungsbildendes Kraftfahrzeug, insbesondere ein Personenkraftwagen, weist ein in einem Cockpitmodul angeordnetes Steuergerät und einen zumindest ein Daten- und / oder Stromkabel umfassenden Kabelstrang zur Verbindung des Steuergeräts mit einem Bordnetz des Kraftfahrzeugs auf, wobei das Steuergerät zumindest einen Anschluss zur elektrischen Kontaktierung des Kabelstrangs aufweist. Erfindungsgemäß ist dieser Anschluss an einer einem Innenraum des Kraftfahrzeugs zugewandten Seite des Steuergeräts angeordnet. Mit anderen Worten wird der Kabelstrang nicht mehr an der (der Fahrzeugfront zugewandten) Rückseite, sondern an der (dem Fahrzeuginnenraum zugewandten) Vorderseite des Steuergeräts angeschlossen. Mit anderen Worten besteht der Kern der Erfindung darin, die Einbaulage des Steuergeräts um 180 Grad um seine Hochachse zu drehen. Es muss also das Steuergerät selbst zur Umsetzung der Erfindung nicht notwendigerweise umgebildet werden.

Die Erfinder haben erkannt, dass die Voraussetzungen, die die im Stand der Technik bekannte Einbaulage von Steuergeräten im Cockpitbereich bedingt haben, mit dem technischen Fortschritt entfallen sind. Zum einen sind, wie vorab beschrieben, Bedien- und Anzeigeelemente von im Cockpitbereich angeordneten Steuergeräten in aller Regel nicht mehr integraler Bestandteil dieser Steuergeräte, sondern werden separat angeordnet und mittels Datenleitungen mit dem Steuergerät verbunden. Ein weiterer Grund für die Anordnung eines Steuergeräts im Cockpitbereich derart, dass die Vorderseite des Steuergeräts im Wesentlichen bündig mit der den Einbauschacht umgebenden Oberfläche des Cockpits abschließt, liegt darin, dass das Steuergerät zur Aufnahme von Ton- und Datenträgern, insbesondere CDs und DVDs, eingerichtet war. Aufgrund der abnehmenden Bedeutung derartiger Ton- und Datenträger ist jedoch auch diese Voraussetzung in vielen Fällen entfallen.

Indem das Steuergerät den Anschluss an der dem Innenraum des Kraftfahrzeugs zugewandten Seite (also auf der Vorderseite des Steuergeräts) aufweist, kann der im Stand der Technik für die überschüssige Kabellänge des Kabelstrangs benötigte Platz entfallen bzw. anderweitig genutzt werden. Weiterhin muss der Kabelstrang beim Anschließen des Steuergeräts nicht mehr aus dem Einbauschacht herausgezogen werden. Es ist also nicht mehr nötig, den Kabelstrang zum Zwecke der Montage länger zu bemessen, als dies im montierten Zustand des Steuergeräts nötig wäre. Stattdessen kann die Länge des Kabelstrangs so bemessen werden, wie dies die endgültige Einbaulage erfordert. Es wird durch die Erfindung also ermöglicht, durch die Überlänge des Kabelstrangs verursachtes Gewicht und verursachte Kosten einzusparen.

Die Erfindung ermöglicht es darüber hinaus, Steuergeräte im Cockpitbereich flexibler anzuordnen. Beispielsweise können Steuergeräte weiter nach hinten (also in Richtung Fahrzeugfront) versetzt werden. Hierdurch wird ein größerer Gestaltungsspielraum bei der Entwicklung des Cockpitbereichs ermöglicht. Insbesondere entfallen bisher bestehende Einschränkungen bei der Gestaltung des sichtbaren Cockpitbereichs.

Erfindungsgemäß handelt sich bei dem Steuergerät um ein Multimediasteuergerät. Das Multimediasteuergerät moderner Kraftfahrzeuge kann, wie vorab bereits beschrieben, über eine Vielzahl von Funktionen verfügen. Diese Funktionen umfassen den Empfang von Radio- und Fernsehsignalen sowie das Einlesen und ggf. Beschreiben von Ton- und Datenträgern, die Ausgabe von Audiosignalen, die Steuerung von Bedien- und Anzeigeelementen, Telefonfunktionen, Navigationsfunktionen. Häufig stellt das Multimediasteuergerät auch das zentrale Steuergerät für das sogenannte rear seat entertainment dar, also für die den Passagieren auf den Rücksitzen bereitgestellten Unterhaltungselektronikelemente. Das Multimediasteuergerät stellt aufgrund des geschilderten Funktionsumfangs in heutigen Kraftfahrzeugen eines der größten im Cockpitbereich verbauten Steuergeräte dar. Die Erfindung ermöglicht es, den Einbauort des Multimediasteuergeräts im Cockpitbereich flexibler als zuvor zu wählen. An diesem Einbauort kann das Multimediasteuergerät erfindungsgemäß eingebaut und anschließend der Kabelstrang daran angeschlossen werden. Der ohne die Erfindung benötigte Bauraum zur Aufnahme der überschüssigen Länge des Kabelstrangs kann entfallen, so dass für den Einbau des Multimediasteuergeräts insgesamt weniger Platz vorgesehen werden muss.

In vorteilhafter Ausgestaltung der Erfindung ist das Steuergerät in einem Mittelbereich des Cockpitmoduls angeordnet. Typischerweise werden Bedien- und Anzeigeelemente, die für Fahrer und Beifahrer einsehbar bzw. zugänglich sein sollen, im Mittelbereich des Cockpits angeordnet. Hierzu zählen beispielsweise die Bedien- und Anzeigeelemente des Radiogeräts und der Klimaanlage. Die wie vorab beschrieben herkömmlicherweise diese Bedien- und Anzeigeelemente aufweisenden Steuergeräte, insbesondere Radiogeräte, wurden daher ebenfalls im Mittelbereich angebracht. Mit zunehmender Zahl der im Cockpitbereich unterzubringenden Elemente sowie mit zunehmender Größe der Steuergeräte wird der zur Verfügung stehende Platz im Mittelbereich jedoch knapp. Auf herkömmliche Weise montierte Steuergeräte wirken sich daher einschränkend auf die Freiheit bei der Gestaltung des Cockpitbereichs aus. Indem die Erfindung auf Steuergeräte im Mittelbereich, insbesondere auf das Multimediasteuergerät, angewandt wird, kann der Mittelbereich flexibler gestaltet werden. Beispielsweise können dem Fahrer Ablagefächer bereitgestellt werden, für die bisher kein Platz war.

Vorzugsweise ist das Steuergerät mittels eines Einbaurahmens mit einer Trägerstruktur des Cockpitmoduls verbunden. Das Cockpitmodul, das wie vorab beschrieben an einem separaten Vormontageplatz montiert wird, umfasst eine Trägerstruktur. Diese wiederum kann einerseits einen Querträger umfassen, der an der Fahrzeugkarosserie befestigt wird und das Cockpitmodul mit der Karosserie verbindet. Der Querträger kann aus Metall bestehen. Weiter kann die Trägerstruktur ein mitunter als Funktionsträger bezeichnetes Element umfassen, an welchem die weiteren Elemente des Cockpitmoduls befestigt werden können. Der Funktionsträger kann aus Kunststoff bestehen. Diese Trägerstruktur des Cockpitmoduls kann sich in ihrer konkreten Ausgestaltung zwischen unterschiedlichen Fahrzeugmodellen stark unterscheiden. Um ein bestimmtes Steuergerätemodell dennoch möglichst flexibel in unterschiedliche Fahrzeugmodelle einbauen zu können, ist ein Einbaurahmen von Vorteil. Dabei können die Elemente des Einbaurahmens für die Befestigung an der Trägerstruktur des Cockpitmoduls je nach Fahrzeugmodell unterschiedlich gestaltet werden, wohingegen die Elemente des Einbaurahmens für die Befestigung des Steuergeräts gleichbleibend gestaltet sein können. Darüber hinaus erleichtert die Verwendung eines Einbaurahmens eine spätere Entnahme des Steuergeräts, beispielsweise im Fall eines Austauschs.

In einer alternativen Ausführungsform ist das Steuergerät direkt mit der Trägerstruktur des Cockpitmoduls verbunden. Es wird dann also kein Einbaurahmen verwendet. Diese Ausführungsform wird dann empfohlen, wenn die vorab beschriebenen Vorteile des Einbaurahmens von nachrangigem Interesse sind, wohingegen das Hauptaugenmerk auf der Einsparung von Material und Gewicht liegt.

In einer besonders vorteilhaften Weiterbildung der Erfindung ist das Steuergerät um eine in Fahrzeugquerrichtung verlaufende Schwenkachse schwenkbar mit der Trägerstruktur des Cockpitmoduls verbunden. Die Verbindung kann - wie vorstehend beschrieben - entweder unmittelbar oder mittelbar mittels eines Einbaurahmens hergestellt sein. Indem das Steuergerät schwenkbar ist, kann die endgültige Einbaulage abweichen von der Einbaulage bei der Montage, insbesondere bei einem Schritt des Anschließens des Kabelstrangs an das Steuergerät. Mit anderen Worten kann sich das Steuergerät bei der Montage in einer, beispielsweise im Wesentlichen horizontalen, Einbaulage befinden. Sind die Kabel angeschlossen, kann das Steuergerät geschenkt werden, so dass es beispielsweise eine im Wesentlichen geneigte Lage einnimmt. Auf diese Weise wird es ermöglicht, den im Cockpitmodul zur Verfügung stehenden Platz noch flexibler zu nutzen und dennoch eine optimale Montageposition des Steuergeräts zu gewährleisten.

In einer weiteren bevorzugten Ausführungsform weist das Cockpitmodul auf seiner dem Innenraum des Kraftfahrzeugs zugewandten Seite eine Instrumententafel auf, wobei die Instrumententafel ein Bauteil, insbesondere eine Blende, umfasst, wobei das Bauteil zumindest einen geöffneten und einen geschlossen Zustand aufweist, wobei das Bauteil in dem geöffneten Zustand eine Öffnung der Instrumententafel freigibt und das Bauteil in dem geschlossenen Zustand die Öffnung der Instrumententafel bedeckt, wobei in dem geöffneten Zustand der zumindest eine Anschluss des Steuergeräts zur elektrischen Kontaktierung des Kabelstrangs von dem Innenraum des Kraftfahrzeugs aus zugänglich ist. Mit anderen Worten soll der Anschluss des Steuergeräts für den Kabelstrang durch die Öffnung der Instrumententafel zugänglich sein. Dies ist sowohl für Montagezwecke als auch für spätere Diagnose- und Reparaturzwecke vorteilhaft. Das Bauteil kann beispielsweise Bedien- und / oder Anzeigeelemente wie Schalter, Bedienknöpfe oder Kontrollleuchten umfassen. Um die Öffnung auf einfache Weise öffnen bzw. schließen zu können, ist es jedoch vorteilhaft, als Bauteil eine Blende, insbesondere eine Zierblende, zu verwenden. Der bedeutsame Vorteil der Erfindung in dieser Ausführungsform liegt darin, dass diese Blende nicht mehr mindestens die Ausmaße des Steuergeräts aufweisen muss. Es ist vielmehr ausreichend, dass die Blende groß genug ist, um ein Zugang zu dem Anschluss des Steuergeräts für den Kabelstrang zu ermöglichen. Es ist nämlich durch die vorliegende Erfindung nicht mehr nötig, erst das Cockpitmodul (inklusive seiner Instrumententafel) mit der Fahrzeugkarosserie zu verbinden und erst anschließend das Steuergerät mit dem Kabelstrang zu verbinden und durch die Öffnung in der Instrumententafel in das Cockpitmodul zu schieben. Vielmehr kann das Steuergerät schon vor dem Einbau der Instrumententafel in das Cockpitmodul eingebaut werden. Nachdem das Cockpitmodul in die Fahrzeugkarosserie eingebaut ist, muss dann nur noch der Kabelstrang an das Steuergerät angeschlossen werden. Anschließend wird das Bauteil in den geschlossenen Zustand versetzt. Beispielsweise wird also die Blende auf der Öffnung befestigt. Im Reparaturfall, wenn also beispielsweise eine fehlerhafte elektrische Verbindung des Kabelstrangs mit dem Steuergerät vermutet wird, muss nur die Blende geöffnet werden, um Zugang zu dem Anschluss zu erhalten.

Ein gattungsbildendes Verfahren zur Herstellung eines Kraftfahrzeugs, insbesondere eines Personenkraftwagens, weist die folgenden Schritte auf:
- Vormontage eines Cockpitmoduls,
- Montage einer Karosserie des Kraftfahrzeugs mit einem Bordnetz und einem zumindest ein Daten- und / oder Stromkabel umfassenden Kabelstrang zur Verbindung eines Steuergeräts mit dem Bordnetz,
- Einbringen des Cockpitmoduls in die Karosserie des Kraftfahrzeugs und Verbinden des Cockpitmoduls mit der Karosserie.
Es versteht sich, dass die ersten beiden Schritte nicht in der aufgeführten Reihenfolge stattfinden müssen, sondern unabhängig voneinander, also z.B. auch parallel oder in umgekehrter Reihenfolge, ausgeführt werden können.

Das gesamte Bordnetz eines modernen Kraftfahrzeugs besteht aus Kabeln mit einer Gesamtlänge von mehreren tausend Metern. Diese Kabel werden daher bei der Fahrzeugmontage in aller Regel in einem sehr frühen Stadium verlegt und anschließend nach und nach an die verschiedenen an das Bordnetz angeschlossenen Bauteile des Kraftfahrzeugs angeschlossen.

Aus Effizienzgründen werden größere Module eines Kraftfahrzeugs, also beispielsweise das Cockpitmodul, in größtmöglichem Umfang an separaten Vormontageplätzen montiert und als Ganzes an die eigentliche Montagelinie geliefert. Aus den bereits beschriebenen Gründen wird das Steuergerät nicht bereits bei der Cockpit-Vormontage in das Cockpitmodul eingebaut, sondern dies geschieht es an der Haupt-Montagelinie, nachdem der Kabelstrang an das Steuergerät angeschlossen wurde.

Erfindungsgemäß weist das Verfahren die folgenden weiteren Schritte auf:
- Anbringen eines Multimediasteuergeräts in dem Cockpitmodul, insbesondere in einem Mittelbereich des Cockpitmoduls, derart, dass eine einen Anschluss des Multimediasteuergeräts zur elektrischen Kontaktierung des Kabelstrangs aufweisende Seite des Steuergeräts einem Innenraum des Kraftfahrzeugs zugewandt ist, und
- Verbinden des Kabelstrangs mit dem Anschluss des Multimediasteuergeräts.

Es versteht sich, dass diese beiden kennzeichnenden Verfahrensschritte in der genannten Reihenfolge ausgeführt werden. In dieser Reihenfolge besteht nämlich genau das Wesen der Erfindung in ihrer verfahrensmäßigen Ausprägung. Während also im Stand der Technik zuerst das Steuergerät angeschlossen wird und anschließend in dem Cockpitmodul angebracht wird, kann erfindungsgemäß zuerst das Steuergerät montiert werden und anschließend der Kabelstrang angeschlossen werden. Es ist daher keine (im endgültigen Einbauzustand) überschüssige Länge des Kabelstrangs vonnöten. Ein weiterer Vorteil liegt darin, dass der die Montage ausführende Arbeiter nicht das Steuergerät in einer Hand halten muss, während er den Kabelstrang anschließt. Vielmehr befindet sich gemäß der Verfahrenserfindung das Steuergerät in einer fixierten Lage im Cockpitmodul, so dass dem Arbeiter der Anschluss des Kabelstrangs wesentlich erleichtert ist.

In einer besonders vorteilhaften Weiterbildung des Verfahrens umfasst der Schritt der Vormontage des Cockpitmoduls den Schritt des Anbringens des Steuergeräts in dem Cockpitmodul, insbesondere in dem Mittelbereich des Cockpitmoduls. Mit anderen Worten wird das Steuergerät schon am Vormontageplatz im Cockpitmodul angebracht. An dem Vormontageplatz wird in der Regel aus die Instrumententafel angebracht, wobei die Öffnung freibleibt, die den Zugang zu dem Anschluss des Steuergeräts für den Kabelstrang ermöglicht. An der Montagelinie muss dann nur noch der Kabelstrang an das Steuergerät angeschlossen und die Öffnung mit dem Bauteil, beispielsweise der Blende, geschlossen werden.

Weitere Ausführungsformen der Erfindung werden nachfolgend anhand beispielhafter Darstellungen erläutert. Es zeigen
- Fig. 1: eine perspektivische Darstellung eines Cockpitbereichs gemäß dem Stand der Technik,
- Fig. 2: eine Schnittdarstellung eines Mittelbereichs eines Cockpitmoduls gemäß dem Stand der Technik,
- Fig. 3: eine Schnittdarstellung eines Mittelbereichs eines Cockpitmoduls gemäß einer ersten Ausführungsform der Erfindung,
- Fig. 4: eine Schnittdarstellung eines Mittelbereichs eines Cockpitmoduls gemäß einer zweiten Ausführungsform der Erfindung,
- Fig. 5: eine Schnittdarstellung eines Mittelbereichs eines Cockpitmoduls gemäß einer dritten Ausführungsform der Erfindung.

Gleiche Bezugszeichen kennzeichnen in den Figuren gleiche Merkmale der dargestellten Ausführungsformen der Erfindung. Es wird darauf hingewiesen, dass es sich bei den dargestellten Figuren sowie der zugehörigen Beschreibung lediglich um Ausführungsbeispiele der Erfindung handelt. Insbesondere sind Darstellungen von Merkmalskombinationen in den Figuren und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung.

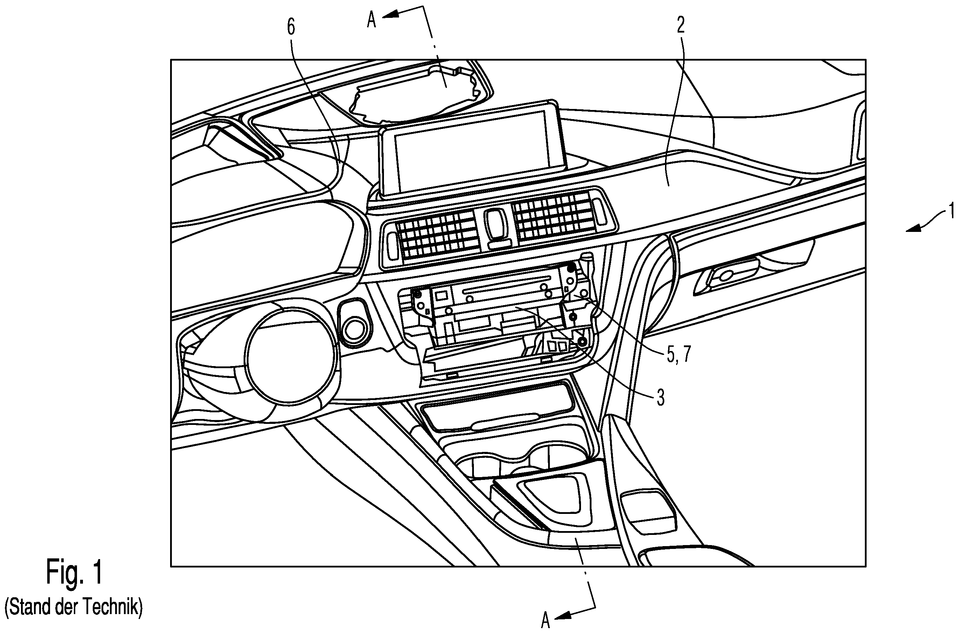

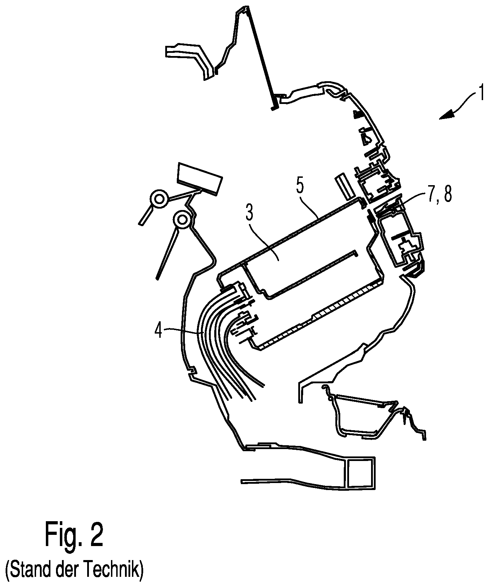

Fig. 1 zeigt eine perspektivische Darstellung eines Cockpitbereichs 1 gemäß dem Stand der Technik, der vorliegend von den von der Anmelderin angebotenen Fahrzeugen der Modellreihe 3er gebildet wird. Fig. 2 zeigt eine Schnittdarstellung des Cockpitbereichs 1 entlang der in Fig. 1 eingezeichneten Schnittlinie A-A, wobei abweichend in Fig. 2 eine Blende 8 dargestellt ist, welche in Fig. 1 weggelassen wurde, um einen Blick durch die Öffnung 7 auf das Multimediasteuergerät 3 zu ermöglichen.

Der Cockpitbereich 1 umfasst ein Cockpitmodul 2, welches an einem separaten Vormontageplatz hergestellt und anschließend mit der Fahrzeugkarosserie verbunden wird. In den Figuren 1 und 2 ist auch ein unterer Mittelbereich des Cockpitbereichs 1 dargestellt, in welchem sich ein Aschenbecher, Trinkgefäßhalter und Armablageflächen befinden. In diesem Bereich werden auch Gangwahlhebel und Handbremshebel angeordnet, die jedoch in den Figuren 1 und 2 nicht dargestellt sind. Der beschriebene untere Mittelbereich ist ein Teil des Cockpitbereichs 1 und kann ein Teil des Cockpitmoduls 2 sein. Dies ist jedoch nicht zwingend der Fall. Mit anderen Worten wird der untere Mittelteil nicht unbedingt an dem Cockpitvormontageplatz als Teil des Cockpitmoduls 2 montiert, sondern kann auch an der eigentlichen Fahrzeugmontagelinie montiert werden.

Eine Öffnung 7 in der Instrumententafel 6 des Cockpitmoduls 2 gibt in Fig. 1 den Blick frei auf das in einem Einbaurahmen 5 montierte Multimediasteuergerät 3. In Fig. 2 verschließt eine Blende 8 die Öffnung 7. Im dargestellten Beispiel handelt es sich nicht um eine Zierblende, sondern um ein Bauteil 8, welches Bedienelemente umfasst.

Im oberen Bereich der Instrumententafel 6 ist eine Anzeigefläche zu erkennen. Man sieht also, dass das Multimediasteuergerät 3 selbst keine Anzeigefläche aufweist. Man erkennt jedoch in Fig. 1, dass das Multimediasteuergerät 3 in seinem oberen Abschnitt eine längliche Öffnung zur Aufnahme eines Ton- oder Datenträgers in Form einer CD oder DVD aufweist. Die in Fig. 2 dargestellte (und in Fig. 1 nicht dargestellte), die Öffnung 7 verdeckende Blende 8 weist an der Position des CD-DVD-Aufnahmeschlitzes eine Öffnung auf, so dass der Nutzer eine CD oder DVD einlegen kann. Wie in Fig. 2 gezeigt, befindet sich auf der gegenüberliegenden Seite des Multimediasteuergeräts 3, also auf der Rückseite, ein Anschluss für die Daten- und Stromkabel des Kabelstrangs 4, welche das Multimediasteuergerät 3 mit dem Bordnetz des Kraftfahrzeugs verbinden. Der Begriff des Bordnetzes ist dabei weit auszulegen und umfasst insbesondere das elektrische Versorgungsnetz des Kraftfahrzeugs sowie die Datenbussysteme des Kraftfahrzeugs, aber auch einzelne (also nicht in Bussysteme oder Versorgungsnetze eingebundene) elektrische Leitungen.

Die Montage des gezeigten Cockpitbereichs 1 erfolgt derart, dass zunächst das Cockpitmodul 2 mit der Fahrzeugkarosserie verbunden wird. Anschließend wird der bereits zu einem früheren Zeitpunkt in der Fahrzeugkarosserie verlegte Kabelstrang 4 durch die Öffnung 7 geführt und an das Multimediasteuergerät 3 angeschlossen. Dieser Vorgang wird in der Regel von einem Arbeiter durchgeführt, der sich im Fahrzeuginnenraum befindet, das Multimediasteuergerät 3 mit der einen Hand nahe der Öffnung 7 hält und mit der anderen Hand den Kabelstrang 4 mit dem Anschluss auf der Rückseite des Multimediasteuergeräts 3 verbindet. Anschließend werden der Kabelstrang 4 und das Steuergerät 3 durch die Öffnung 7 in das Cockpitmodul 2 geschoben. In dieser endgültigen Einbauposition befindet sich der Kabelstrang 4 in einem Hohlraum hinter dem Einbaurahmen 5 des Steuergeräts 3. Im letzten Schritt wird die Öffnung 7 mit der Blende 8 verschlossen.

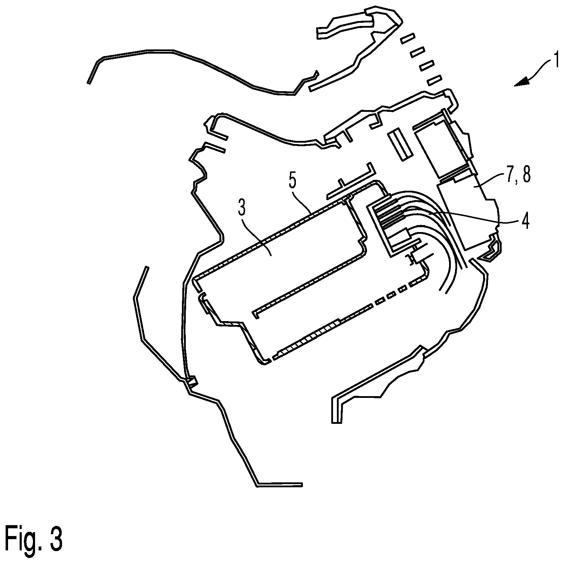

Fig. 3 zeigt eine Schnittdarstellung eines Mittelbereichs eines Cockpitmoduls gemäß einer ersten Ausführungsform der Erfindung. Gegenüber dem in Fig. 2 dargestellten Stand der Technik ist das Multimediasteuergerät 3 um 180 Grad um seine Hochachse gedreht. Es sind also die Vorder- und Rückseite des Multimediasteuergeräts 3 vertauscht. Es ist zu erkennen, dass der Kabelstrang 4 an der dem Innenraum des Kraftfahrzeugs zugewandten Seite des Multimediasteuergeräts 3 angeschlossen ist. Auf der Rückseite des Multimediasteuergeräts 3 muss daher kein Hohlraum für die Aufnahme des Kabelstrangs 4 mehr vorgehalten werden, so dass sich durch die Erfindung ein insgesamt reduzierter Platzbedarf ergibt. Es ergeben sich durch die Erfindung bei der Montage der in Fig. 2 gezeigten Anordnung Vorteile. Es kann nämlich bei der separaten Cockpitvormontage bereits das Multimediasteuergerät 3 in dem Einbaurahmen 5 montiert werden. Nach der Montage des Cockpitmoduls an der Fahrzeugkarosserie muss nur noch der Kabelstrang 4 an das Multimediasteuergerät 3 angeschlossen werden. Hierzu ist im vorliegenden Beispiel der Anschluss des Multimediasteuergeräts 3 für den Kabelstrang 4 durch die Öffnung 7 zugänglich. Der Kabelstrang 4 muss keine in der späteren Einbaulage nicht mehr erforderliche Überlänge aufweisen, da er nicht mehr von hinten (also von der Position hinter dem Einbaurahmen) durch die Öffnung 7 in den Fahrzeuginnenraum geführt werden muss. Die in Fig. 3 dargestellte Blende 8 wird nach dem Schritt des Anschließens montiert und verschließt die Öffnung 7.

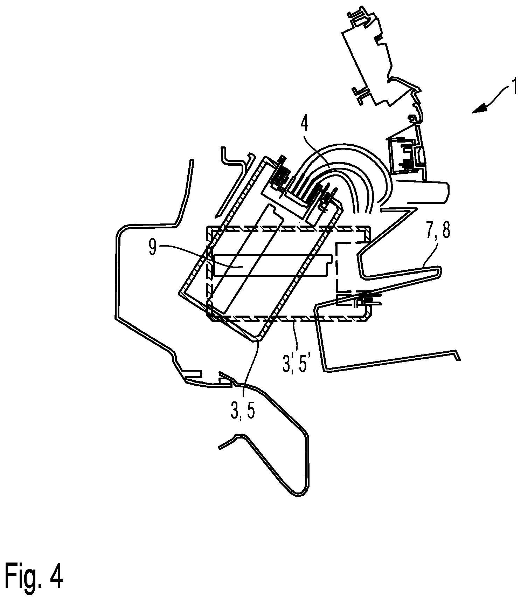

Fig. 4 zeigt eine Schnittdarstellung eines Mittelbereichs eines Cockpitmoduls gemäß einer zweiten Ausführungsform der Erfindung. In dieser Ausführungsform ist der Einbaurahmen 5, 5' des Multimediasteuergeräts 3, 3' um eine in Fahrzeugquerrichtung verlaufende Schwenkachse 9 schwenkbar mit der Trägerstruktur des Cockpitmoduls 2 verbunden. Ebenso ist es denkbar und von der Erfindung umfasst, das Steuergerät 3, 3' unmittelbar, also ohne einen Einbaurahmen 5, 5', schwenkbar an der Trägerstruktur anzuordnen.

Indem der Einbaurahmen 5, 5' des Multimediasteuergeräts 3, 3' schwenkbar ist, kann das Multimediasteuergerät 3, 3' in unterschiedliche Positionen gebracht werden. In Fig. 4 sind zwei Positionen überlagert dargestellt. Die jeweils zwei Bezugszeichen des Einbaurahmens 5, 5' und des Multimediasteuergeräts 3, 3' werden nachfolgend verwendet, um eine erste Position 3', 5' und eine zweite Position 3, 5 zu bezeichnen. In der ersten Position 3', 5'des Multimediasteuergeräts 3' ist der Einbaurahmen 5' mit einer gestrichelten Linie dargestellt. In dieser ersten Position 3', 5' wird der Einbaurahmen 5' und das Multimediasteuergerät 3' im Cockpitmodul 2 anbracht. Das Cockpitmodul 2 wird dann in der Fahrzeugkarosserie montiert. Fig. 4 zeigt deutlich, dass sich die Blende 8 und das Multimediasteuergerät 3' in der ersten Position 3', 5' überlappen. Die Blende 8 kann also nicht montiert werden, solange sich das Multimediasteuergerät 3' in der ersten Position 3', 5' befindet. In der ersten Position 3', 5' ist der Anschluss des Multimediasteuergeräts 3' für den Kabelstrang 4 besonders gut zugänglich. Sobald der Kabelstrang 4 an das Multimediasteuergerät 3' angeschlossen ist, kann das Multimediasteuergerät 3' geschwenkt werden, so dass es von seiner ersten Position 3', 5' in die zweite Position 3, 5 wechselt. Die zweite Position 3, 5 von Einbaurahmen 5 und Multimediasteuergerät 3 ist in Fig. 4 mit einer durchgängigen Linie dargestellt. Wenn sich das Multimediasteuergerät 3 in der zweiten Position 3, 5 befindet, findet die Blende 8 ausreichend Platz und kann auf der Öffnung 7 montiert werden. Der Vorteil der beschriebenen Ausführungsform liegt darin, dass der Gestaltungsspielraum des Cockpitbereichs und der zur Verfügung stehende Platz vergrößert werden. So ist in Fig. 4 zu erkennen, dass die Blende ein Ablagefach bildet. Der Platz für dieses Ablagefach wird durch den Einsatz der Erfindung in der beschriebenen Ausführungsform geschaffen.

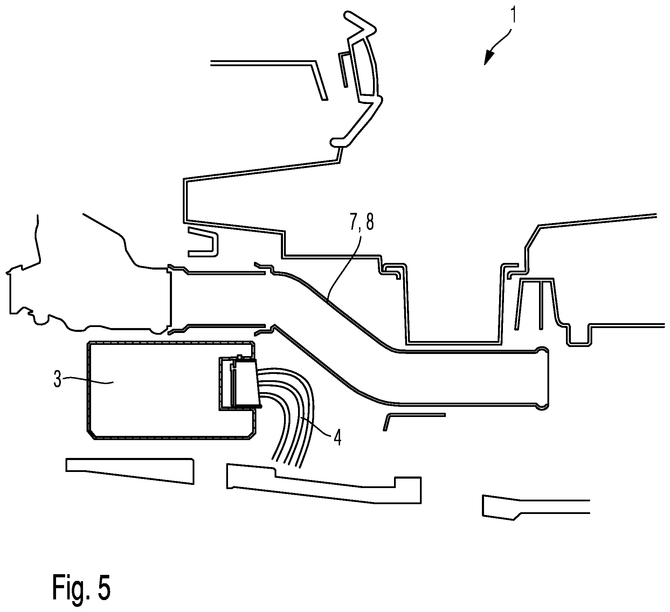

Fig. 5 zeigt eine Schnittdarstellung eines Mittelbereichs eines Cockpitmoduls 2 gemäß einer dritten Ausführungsform der Erfindung. In dieser Ausführungsform der Erfindung ist das Multimediasteuergerät 3 im unteren Bereich des Cockpitmoduls 2 angeordnet. Es versteht sich, dass es sich auch um ein anderes Steuergerät 3 als ein Multimediasteuergerät 3 handeln könnte. Indem - anders als in den vorstehend beschriebenen Figuren 1 bis 4 - das Steuergerät 3 nicht mehr im oberen Mittelbereich des Cockpitmoduls 2 angeordnet ist, kann dieser obere Mittelbereich noch flexibler gestaltet werden und beispielsweise eine noch größere Zahl und Größe von Ablagefächern aufweisen. In dem in Fig. 5 dargestellten Ausführungsbeispiel wird das Steuergerät 3 direkt an der Trägerstruktur des Cockpitmoduls 2 befestigt. Es ist also kein Einbaurahmen vorgesehen. Es könnte aber ein Einbaurahmen vorgesehen werden.

Die Montage erfolgt in diesem Beispiel wie bereits beschrieben. Das Steuergerät 3 wird also bei der Cockpitvormontage in dem Cockpitmoduls 2 montiert. Das Cockpitmodul 2 wird dann an die Fahrzeugkarosserie montiert. In Fig. 5 ist erkennbar, dass die Öffnung 7 eine Öffnung 7 im unteren Mittelbereich des Cockpitbereichs 1 ist. Wie vorstehend mit Bezug zu den Figuren 1 und 2 erwähnt, ist dieser untere Bereich nicht notwendigerweise ein Teil des Cockpitmoduls 2. Der dargestellte Fall, dass die Öffnung 7 sich in einem nicht vom Cockpitmodul 2 umfassten Bereich des Cockpitbereichs 1 befindet, soll jedoch ausdrücklich von der Erfindung umfasst sein. Nachdem der Kabelstrang 4 an das Steuergerät 3 angeschlossen ist, wird die Öffnung 7 mit der Blende 8 verschlossen. Im gezeigten Ausführungsbeispiel wird über der Blende 8 noch ein weiteres Bauteil montiert, welches einen Getränkehalter umfasst.

### Bezugszeichenliste

- 1: Cockpitbereich
- 2: Cockpitmodul
- 3, 3': Multimediasteuergerät
- 4: Kabelstrang
- 5, 5': Einbaurahmen
- 6: Instrumententafel
- 7: Öffnung
- 8: Blende
- 9: Schwenkachse
- A-A: Schnittlinie im Mittelbereich des Cockpitmoduls

## Patentansprüche

1. Kraftfahrzeug, insbesondere Personenkraftwagen, mit einem in einem Cockpitmodul (2) angeordneten Multimediasteuergerät (3) und einem zumindest ein Daten- und / oder Stromkabel umfassenden Kabelstrang (4) zur Verbindung des Multimediasteuergeräts (3) mit einem Bordnetz des Kraftfahrzeugs, wobei das Multimediasteuergerät (3) zumindest einen Anschluss zur elektrischen Kontaktierung des Kabelstrangs (4) aufweist und wobei der Anschluss an einer einem Innenraum des Kraftfahrzeugs zugewandten Seite des Multimediasteuergeräts (3) angeordnet ist.

2. Kraftfahrzeug nach Anspruch 1, **dadurch gekennzeichnet, dass** das Multimediasteuergerät (3) in einem Mittelbereich des Cockpitmoduls (2) angeordnet ist.

3. Kraftfahrzeug nach einem der vorhergehenden Ansprüche, **dadurch gekennzeichnet, dass** das Multimediasteuergerät (3) mittels eines Einbaurahmens (5) mit einer Trägerstruktur des Cockpitmoduls (2) verbunden ist.

4. Kraftfahrzeug nach einem der Ansprüche 1 bis 2, **dadurch gekennzeichnet, dass** das Multimediasteuergerät (3) direkt mit einer Trägerstruktur des Cockpitmoduls (2) verbunden ist.

5. Kraftfahrzeug nach einem der Ansprüche 3 oder 4, **dadurch gekennzeichnet, dass** das Multimediasteuergerät (3) um eine in Fahrzeugquerrichtung verlaufende Schwenkachse (9) schwenkbar mit der Trägerstruktur des Cockpitmoduls (2) verbunden ist.

6. Kraftfahrzeug nach einem der vorhergehenden Ansprüche, **dadurch gekennzeichnet, dass** das Cockpitmodul (2) auf seiner dem Innenraum des Kraftfahrzeugs zugewandten Seite eine Instrumententafel (6) aufweist, wobei die Instrumententafel (6) ein Bauteil, insbesondere eine Blende (8), umfasst, wobei das Bauteil (8) zumindest einen geöffneten und einen geschlossen Zustand aufweist, wobei das Bauteil (8) in dem geöffneten Zustand eine Öffnung (7) der Instrumententafel (6) freigibt und das Bauteil (8) in dem geschlossenen Zustand die Öffnung (7) der Instrumententafel (6) bedeckt, wobei in dem geöffneten Zustand der zumindest eine Anschluss des Multimediasteuergeräts (3) zur elektrischen Kontaktierung des Kabelstrangs (4) von dem Innenraum des Kraftfahrzeugs aus zugänglich ist.

7. Verfahren zur Herstellung eines Kraftfahrzeugs, insbesondere eines Personenkraftwagens, mit den Schritten
- Vormontage eines Cockpitmoduls (2),
- Montage einer Karosserie des Kraftfahrzeugs mit einem Bordnetz und einem zumindest ein Daten- und / oder Stromkabel umfassenden Kabelstrang (4) zur Verbindung eines Multimediasteuergeräts (3) mit dem Bordnetz,
- Einbringen des Cockpitmoduls (2) in die Karosserie des Kraftfahrzeugs und Verbinden des Cockpitmoduls (2) mit der Karosserie,
**gekennzeichnet durch** die weiteren Schritte
- Anbringen eines Multimediasteuergeräts (3) in dem Cockpitmodul (2), insbesondere in einem Mittelbereich des Cockpitmoduls (2), derart, dass eine einen Anschluss des Steuergeräts (3) zur elektrischen Kontaktierung des Kabelstrangs (4) aufweisende Seite des Multimediasteuergeräts (3) einem Innenraum des Kraftfahrzeugs zugewandt ist, und
- Verbinden des Kabelstrangs (4) mit dem Anschluss des Multimediasteuergeräts (3).

8. Verfahren zur Herstellung eines Kraftfahrzeugs nach Anspruch 7, **dadurch gekennzeichnet, dass** der Schritt der Vormontage des Cockpitmoduls (2) den Schritt des Anbringens des Multimediasteuergeräts (3) in dem Cockpitmodul (2), insbesondere in dem Mittelbereich des Cockpitmoduls, umfasst.

## Claims

1. A motor vehicle, more especially a passenger car, comprising a multimedia control unit (3) arranged in a cockpit module (2) and a cable harness (4), comprising at least one data cable and/or power cable, for connecting the multimedia control unit (3) to an on-board power supply system of the motor vehicle, wherein the multimedia control unit (3) has at least one port for electrically contacting the cable harness (4), and wherein the port is arranged on a side of the multimedia control unit (3) facing towards the interior of the motor vehicle.

2. A motor vehicle according to claim 1, **characterised in that** the multimedia control unit (3) is arranged in a central region of the cockpit module (2).

3. A motor vehicle according to any one of the preceding claims, **characterised in that** the multimedia control unit (3) is connected by means of an installation frame (5) to a carrier structure of the cockpit module (2).

4. A motor vehicle according to any one of claims 1 to 2, **characterised in that** the multimedia control unit (3) is connected directly to a carrier structure of the cockpit module (2).

5. A motor vehicle according to any one of claims 3 or 4, **characterised in that** the multimedia control unit (3) is connected to the carrier structure of the cockpit module (2) pivotably about a pivot axis (9) running in the transverse direction of the vehicle.

6. A motor vehicle according to any one of the preceding claims, **characterised in that** the cockpit module (2) has an instrument panel (6) on its side facing towards the interior of the motor vehicle, wherein the instrument panel (6) comprises a component, more especially a cover (8), wherein the component (8) has at least an open and a closed state, wherein the component (8) in the open state makes accessible an opening (7) in the instrument panel (6) and the component (8) in the closed state covers the opening (7) in the instrument panel (6), wherein in the open state the at least one port of the multimedia control unit (3) is accessible for electrical contacting of the cable harness (4) from the interior of the motor vehicle.

7. A method for producing a motor vehicle, more especially a passenger car, said method having the following steps:
- pre-assembling a cockpit module (2),
- assembling a body of the motor vehicle with an on-board power supply system and a cable harness (4) comprising at least one data cable and/or power cable for connecting a multimedia control unit (3) to the on-board power supply system,
- introducing the cockpit module (2) into the body of the motor vehicle and connecting the cockpit module (2) to the body,
**characterised by** the following further steps:
- attaching a multimedia control unit (3) in the cockpit module (2), more especially in a central region of the cockpit module (2), in such a way that a side of the multimedia control unit (3) having a port of the control unit (3) for electrically contacting the cable harness (4) faces towards the interior of the motor vehicle, and
- connecting the cable harness (4) to the port of the multimedia control unit (3).

8. A method for producing a motor vehicle according to claim 7, **characterised in that** the step of pre-assembling the cockpit module (2) comprises the step of attaching the multimedia control unit (3) in the cockpit module (2), more especially in the central region of the cockpit module.

## Revendications

1. Véhicule automobile notamment véhicule de tourisme comportant un appareil de commande multimédia (3) installé dans un module d'habitacle (2) et au moins un faisceau de câbles (4) comprenant des câbles de transmission de données et/ou d'alimentation électrique pour relier l'appareil de commande multimédia (3) au réseau de bord du véhicule automobile,
- l'appareil de commande multimédia (3) ayant au moins un raccord pour le branchement électrique du faisceau de câble (4), et
le raccord étant sur le côté de l'appareil de commande multimédia (3) tourné vers l'intérieur du véhicule.

2. Véhicule automobile selon la revendication 1,
**caractérisé en ce que**
l'appareil de commande multimédia (3) est placé dans la zone médiane du module d'habitacle (2).

3. Véhicule automobile selon la revendication précédente,
**caractérisé en ce que**
l'appareil de commande multimédia (3) est relié par un châssis de montage (5) à la structure portante du module d'habitacle (2).

4. Véhicule automobile selon les revendications 1 et 2,
**caractérisé en ce que**
l'appareil de commande multimédia (3) est relié directement à la structure portante du module d'habitacle (2).

5. Véhicule automobile selon l'une des revendications 3 ou 4,
**caractérisé en ce que**
l'appareil de commande multimédia (3) est relié de façon pivotante à la structure portante du module d'habitacle (2) autour d'un axe de pivotement (9) dans la direction transversale du véhicule.

6. Véhicule automobile selon l'une des revendications précédentes,
**caractérisé en ce que**
le module d'habitacle (2) comporte un tableau d'instruments (6) sur son côté tourné vers l'intérieur du véhicule,
- le tableau d'instruments (6) comportant un composant, notamment un écran (8),
- l'écran (8) ayant au moins un état ouvert et un état fermé,
- à l'état ouvert le composant (8) libère une ouverture (7) du tableau d'instrument (6) et à l'état fermé le composant (8) ouvre l'ouverture (7) du tableau d'instrument (6),
- à l'état ouvert au moins un raccord de l'appareil de commande multimédia (3) est accessible pour le branchement électrique du faisceau de câbles (4) à partir de l'intérieur du véhicule.

7. Procédé de fabrication d'un véhicule automobile, notamment d'un véhicule de tourisme avec les étapes suivantes consistant à :
- effectuer un pré-assemblage d'un module d'habitacle (2),
- installer une carrosserie du véhicule automobile avec un réseau embarqué et au moins un faisceau de câbles (4) avec des câbles de transmission données et/ou d'alimentation électrique pour relier l'appareil de commande multimédia (3) au réseau de bord,
- introduire le module d'habitable (2) dans la carrosserie du véhicule automobile et relier le module d'habitacle (2) à la carrosserie,
procédé **caractérisé par** les étapes suivantes consistant à :
- installer un appareil de commande multimédia (3) dans le module d'habitacle (2), notamment dans la zone centrale du module d'habitacle (2) pour que le côté de l'appareil de commande multimédia (3) comportant un raccord de l'appareil de commande (3) pour que le branchement électrique du faisceau de câble (4) soit tourné vers l'intérieur du véhicule, et
- relier le faisceau de câble (4) au raccord d'appareil de commande multimédia (3).

8. Procédé de fabrication d'un véhicule automobile selon la revendication 7,
**caractérisé en ce que**
l'étape de préassemblage du module d'habitacle (2) comprend l'étape de fixation de l'appareil de commande multimédia (3) dans le module d'habitacle (2), notamment dans la zone centrale du module d'habitacle.
